# EUROPEAN PATENT SPECIFICATION

(11) **EP 1 957 403 B1**
(45) Date of publication and mention of the grant of the patent: **17.02.2010**
(21) Application number: 06830274.4
(22) Date of filing: 01.12.2006
(51) Int. Cl.: C01B 13/36, C01F 7/00, C08K 9/04

(54) **CLAY COMPRISING CHARGE-BALANCING ORGANIC IONS AND NANOCOMPOSITE MATERIALS COMPRISING THE SAME**
LADUNGSAUSGLEICHENDE ORGANISCHE IONEN ENTHALTENDER TON UND NANOVERBUNDWERKSTOFFE DAMIT
ARGILE COMPRENANT DES IONS ORGANIQUES PERMETTANT D'EQUILIBRER LES CHARGES ET MATERIAUX NANOCOMPOSITES COMPRENANT CETTE ARGILE

(30) Priority: 06.12.2005 EP 05111752; 22.12.2005 EP 05112820; 18.01.2006 US 759583 P
(43) Date of publication of application: 20.08.2008
(73) Proprietor: Akzo Nobel N.V., 6824 BM Arnhem (NL)
(72) Inventor: SCHOMAKER, Elwin, NL-6828 EH Arnhem (NL); WINTERS, Robin, NL-6681 EM Bemmel (NL); DE VOS, Siebe Cornelis, NL-6846 JL Arnhem (NL)
(74) Representative: Schalkwijk, Pieter Cornelis
(86) International application number: PCT/EP2006/069207
(87) International publication number: WO 2007/065861

(56) References cited:
- WO-A-2006/058846
- DE-A1- 19 836 580
- US-A1- 2003 114 699
- DREZDZON M A: "SYNTHESIS OF ISOPOLYMETALATE-PILLARED HYDROTALCITE VIA ORGANIC-ANION-PILLARED PRECURSORS" INORGANIC CHEMISTRY, AMERICAN CHEMICAL SOCIETY, EASTON, US, vol. 27, 1988, pages 4628-4632, XP001169287 ISSN: 0020-1669
- CARLINO S: "The intercalation of carboxylic acids into layered double hydroxides: a critical evaluation and review of the different methods" SOLID STATE IONICS, NORTH HOLLAND PUB. COMPANY. AMSTERDAM, NL, vol. 98, no. 1-2, 1 June 1997 (1997-06-01), pages 73-84, XP004126133 ISSN: 0167-2738

## Description

The invention relates to layered double hydroxides comprising two or more charge-balancing organic anions and their use. The invention further relates to nanocomposite materials comprising these layered double hydroxides and their use.

Layered double hydroxides (LDHs) with two or more charge-balancing organic anions are known in the art. For example, US 2003/0114699 discloses layered double hydroxides comprising a mixture of three organic anions as charge-balancing anions. In particular, a hydrotalcite-like anionic clay is described which contains a mixture of stearic acid, acrylic acid, and acetic acid, and an LDH containing a mixture of stearic acid, acetic acid, and hexanoic acid.

WO 2004/019137 describes the use of modified layered double hydroxides in for example toner resins. These modified LDHs are described as comprising charge-balancing organic anions having at least two anionic groups. An example of such an organic anion is the dicarboxylate of sebacic acid. WO 2004/019137 further discloses LDHs with a mixture of sebacic acid and stearic acid as charge/balancing anions. It is noted that these modified LDHs in their particulate form serve as charge control agent. The presence of the dicarboxylate causes the clay platelets to be pillared together, making exfoliation or delamination very hard or even impossible.

It is an object of the present invention to provide a modified layered double hydroxide which can be more suitably used in nanocomposites and to provide nanocomposite materials comprising these modified layered double hydroxides.

This objective is achieved with a layered double hydroxide having a distance between the individual layers of the layered double hydroxide of above 1.5 nm and comprising 2 or more charge-balancing organic anions having 8 or more carbon atoms, wherein at least 2 of the organic anions have a different number of carbon atoms, and wherein less than 10% of the total of charge-balancing anions is charge-balancing organic anions having two or more anionic groups. Compared to conventional LDHs comprising organic anions, the layered double hydroxide of the invention can generally be more easily exfoliated and/or delaminated in a polymer matrix and is thus particularly suitably used in nanocomposite materials. Consequently, the modified LDH is easier to process in polymer matrices, which in turn may lead to a larger amount of the modified LDH being exfoliated and/or delaminated. These LDHs may further make the process for preparing these nanocomposite materials more energy-efficient and cheaper. A further advantage of these modified LDHs is that the mix of charge-balancing organic anions generally is more compatible and by choosing the right combination of organic anions can be tuned to be more compatible with the polymeric matrix.

In the context of the present application the term "charge-balancing organic anion" refers to organic ions that compensate for the electrostatic charge deficiencies of the crystalline clay sheets of the LDH. As the clay typically has a layered structure, the charge-balancing organic ions may be situated in the interlayer, on the edge or on the outer surface of the stacked clay layers. Such organic ions situated in the interlayer of stacked clay layers are referred to as intercalating ions.
Such a stacked clay or organoclay may also be delaminated or exfoliated, e.g. in a polymer matrix. Within the context of the present specification, the term "delamination" is defined as reduction of the mean stacking degree of the clay particles by at least partial de-layering of the clay structure, thereby yielding a material containing significantly more individual clay sheets per volume. The term "exfoliation" is defined as complete delamination, i.e. disappearance of periodicity in the direction perpendicular to the clay sheets, leading to a random dispersion of individual layers in a medium, thereby leaving no stacking order at all.

Swelling or expansion of the clays, also called intercalation of the clays, can be observed witch X-ray diffraction (XRD), because the position of the basal reflections - i.e. the d(*00I*) reflections - is indicative of the distance between the layers, which distance increases upon intercalation.
Reduction of the mean stacking degree can be observed as broadening, up to disappearance, of the XRD reflections or by an increasing asymmetry of the basal reflections (*00I*).
Characterization of complete delamination, i.e. exfoliation, remains an analytical challenge, but may in general be concluded from the complete disappearance of non-(*hk0*) reflections from the original clay.
The ordering of the layers and, hence, the extent of delamination, can further be visualized with transmission electron microscopy (TEM).

The LDHs comprising charge-balancing organic anion have a layered structure corresponding to the general formula: 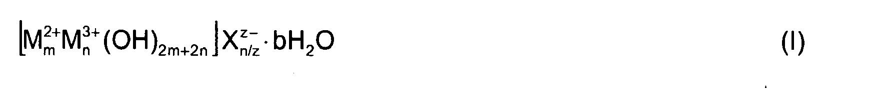 wherein M²⁺ is a divalent metal ion such as Zn²⁺, Mn²⁺, Ni²⁺, Co²⁺, Fe²⁺, Cu²⁺; Sn²⁺, Ba²⁺, Ca²⁺, M²⁺ M³⁺ is a trivalent metal ion such as Al³⁺, Cr³⁺, Fe³⁺, Co³⁺, Mn³⁺, Ni³⁺, Ce³⁺, and Ga³⁺, m and n have a value such that m/n = 1 to 10, and b has a value in the range of from 0 to 10. X is a mixture of 2 or more charge-balancing organic anions having 8 or more carbon atoms and optionally any other organic anion or inorganic anion including hydroxide, carbonate, bicarbonate, nitrate, chloride, bromide, sulfonate, sulfate, bisulfate, vanadates, tungstates, borates, and phosphates. For the purpose of this specification, carbonate and bicarbonate anions are defined as being of an inorganic nature.

The LDH of the invention includes hydrotalcite and hydrotalcite-like anionic LDHs. Examples of such LDHs are meixnerite, manasseite, pyroaurite, sjögrenite, stichtite, barberonite, takovite, reevesite, and desautelsite. In one embodiment of the invention, the layered double hydroxide has a layered structure corresponding to the general formula: 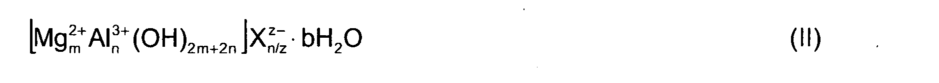 wherein m and n have a value such that m/n = 1 to 10, preferably 1 to 6, more preferably 2 to 4, and most preferably a value close to 3; b has a value in the range of from 0 to 10, generally a value of 2 to 6, and often a value of about 4. X is a charge-balancing ion as defined above. It is preferred that m/n should have a value of 2 to 4, more particularly a value close to 3.

The LDH may have any crystal form known in the art, such as described by Cavani et al. (Catalysis Today, 11 (1991), pp.173-301) or by Bookin et al. (Clays and Clay Minerals, (1993), Vol. 41(5), pp.558-564), such as 3H₁, 3H₂, 3R₁, or 3R₂ stacking.

The distance between the individual clay layers in the LDH generally is larger than the distance between the layers of an LDH that contains only carbonate as charge-balancing anion. Preferably, the distance between the layers in an LDH according to the invention is at least 1.5 nm, more preferably at least 1.8 nm, and most preferably at least 2 nm. The distance between the individual layers can be determined using X-ray diffraction, as outlined before.

The LDH of the invention comprises 2 or more charge-balancing organic anions having 8 or more carbon atoms. At least 2 of these organic anions have a different number of carbon atoms. Such organic anions having at least 8 carbon atoms include mono-, di- or polycarboxylates, sulfonates, phosphonates, nitrates, and sulfates. Preferably, the organic anion comprises at least 10 carbon atoms, preferably from 10 to 40 carbon atoms, and most preferably from 12 to 30 carbon atoms. It is envisaged to use 2 or more organic anions, at least one of which has at least 8 carbon atoms, and the resulting LDH has an interlayer distance of at least 1.5 nm; one of the other organic anions may thus have less than 8 carbon atoms.
It is further contemplated that the charge-balancing organic anion comprises one or more functional groups such as acrylate, methacrylate, hydroxyl, chloride, amine, epoxy, thiol, vinyl, di- and polysulfides, carbamate, ammonium, sulphonium, phosphonium, phosphinic, isocyanate, mercapto, hydroxyphenyl, hydride, acetoxy, and anhydride. If such organically modified LDHs are used in polymeric matrices, these functional groups may interact or react with the polymer.
It is noted that less than 10% of the total charge-balancing organic anions are organic anions having 2 or more anionic groups. In the context of the present application the term "anionic group" refers to a group with an anionic charge. Examples of such anionic groups are carboxylate, sulfonate, phosphonate, nitrate, and sulfate. These organic anions having 2 or more anionic groups are less preferred, as they are generally capable of interconnecting two consecutive layers, causing them to be incapable of exfoliation or delamination, and thus less suitable for use in nanocomposite materials. For this reason the amount of such organic anions as charge-balancing anions should be kept below 10% (mole/mole) of the total amount of the charge-balancing organic anions, preferably below 5%, and more preferably below 2%. In one embodiment of the invention, the organic anions having 2 or more anionic groups are absent.
Examples of organic anions suitable for use in the LDHs of the invention are monocarboxylates such as fatty acid-derived anions, naphthenic acid-derived anions and rosin-based ions.
The LDH of the invention may comprise two or more saturated or unsaturated fatty acid-derived organic anions having from 8 to 22 carbon atoms. The modified LDH may comprise naphthenic acid-derived organic anions (i.e. a mixture of various carboxylic acids comprising a cyclopentane ring). It may also comprise a combination of a rosin-based acid with a saturated or unsaturated fatty acid-derived anion.

Examples of fatty acid-derived anions having from 8 to 22 carbon atoms include organic anions derived from caprylic acid, capric acid, lauric acid, myristic acid, palmitic acid, stearic acid, arachidic acid, decenoic acid, palmitoleic acid, oleic acid, linoleic acid, linolenic acid, and mixtures thereof.
Rosin-based acid or rosin is derived from natural sources, is readily available, and is relatively cheap compared to synthetic organic anions. Typical examples of natural sources of rosin are gum rosin, wood rosin, and tall oil rosins. Rosin commonly is a mixture of a wide variety of different isomers of monocarboxylic tricyclic rosin acids usually containing 20 carbon atoms. The tricyclic structures of the various rosin acids differ mainly in the position of the double bonds. Typically, rosin is a mixture of substances comprising levopimaric acid, neoabietic acid, palustric acid, abietic acid, dehydroabietic acid, seco-dehydroabietic acid, tetrahydroabietic acid, dihydroabietic acid, pimaric acid, and isopimaric acid. Rosin derived from natural sources also includes rosins, i.e. rosin mixture, modified notably by polymerization, isomerization, disproportionation, hydrogenation, and Diels-Alder reactions with acrylic acid, anhydrides, and acrylic acid esters. The products obtained by these processes are referred to as modified rosins. Natural rosin may also be chemically altered by any process known in the art, such as for example reaction of the carboxyl group on the rosin with metal oxides, metal hydroxides or salts to form rosin soaps or salts (so-called resinates). Such chemically altered rosins are referred to as rosin derivatives.
Such rosin can be modified or chemically altered by introducing an organic group, an anionic group or a cationic group. The organic group may be a substituted or unsubstituted aliphatic or aromatic hydrocarbon having 1 to 40 carbon atoms. The anionic group may be any anionic group known to the man skilled in the art, such as a carboxylate or a sulfonate.
Further details of these rosin-based materials can be gleaned from D.F. Zinkel and J. Russell (in Naval Stores, production-chemistry-utilization, 1989, New York, Section II, Chapter 9), and J.B. Class ("Resins, Natural," Chapter 1: "Rosin and Modified Rosins," Kirk-Othmer Encyclopedia of Chemical Technology, online posting date: December 4, 2000).

In a further embodiment of the invention, the LDH comprises 3 or more charge-balancing organic anions having 8 or more carbon atoms. Preferably, the LDH of the invention comprises 4 or more charge-balancing organic anions having 8 or more carbon atoms. It is believed that the more organic anions are present as charge-balancing organic anions, the easier the modified LDH will exfoliate or delaminate in a polymer matrix. In addition, these modified LDHs will generally be more compatible with a wider range of polymeric matrices.
It is contemplated that next to the organic anions having 8 or more carbon atoms, other organic anions having less than 8 carbon atoms and/or inorganic anions as defined above can be present as charge-balancing anions in the modified LDH of the invention.

Generally, at least 10% of the total amount of intercalating ions in the LDH types according to the invention is the mixture of 2 or more organic anions having 8 or more carbon atoms, preferably at least 30%, more preferably at least 60%, and most preferably at least 90% of the total amount of intercalating ions is the mixture of 2 or more organic anions having 8 or more carbon atoms. In one embodiment of the invention, at least 10% of the total amount of charge-balancing organic anions is a fatty acid-derived or a rosin-based anion or a mixture of both anions; preferably at least 30%, more preferably at least 60%, and most preferably at least 90% of the total amount of charge-balancing ions is a fatty acid-derived or a rosin-based anion or a mixture of both anions.

The LDH according to the invention can be prepared in analogous manner to known methods for the preparation of prior art organoclays. Examples of such methods for LDHs can be found in WO 00/09599.
Suitable methods for the preparation of the organoclay according to the invention include:
a. ion-exchange with the organic ions;
b. synthesis of the clay in the presence of the organic ions;
c. calcination of the clay and subsequent rehydration in the presence of the organic ions;
d. exchange of carbonate ions of the clay with a mineral acid and subsequent ion-exchange with the organic ions.

For further methods reference is made to Carlino (Solid State Ionics, 1996, 98, pp. 73-84). In this article, methods such as the thermal or melt reaction method and the glycerol-effected exchange method are described. According to the thermal or melt reaction method, LDH and the mixture of organic anions are intimately mixed at elevated temperature, preferably at a temperature above the melting temperature of the organic anion with the highest melting temperature. According to the glycerol-effected exchange method, there is intermediate swelling with glycerol of the LDH, after which the mixture of organic anions is introduced and subsequent intercalation takes place. It is noted that this method can also be carried out using swelling agents other than glycerol, such as ethanol, 2-ethoxy propanol, 2-propanol, butanol, triethylene glycol, etc. Alternatively, the LDH of the invention can be prepared by melt blending the charge-balancing anions and clay.

The LDH of the invention can be used as a constituent in coating compositions, (printing) ink formulations, adhesive tackifiers, resin-based compositions, rubber compositions, cleaning formulations, drilling fluids and cements, plaster formulations, non-woven fabrics, fibres, foams, membranes, orthoplastic casts, (pre-)ceramic materials, and hybrid organic-inorganic composite materials such as polymer-based nanocomposites. The LDH of the invention can further be used in polymerization reactions such as solution polymerization, emulsion polymerization, and suspension polymerization. The organoclay may further serve as a crystallization aid in semi-crystalline polymers, such as polypropylene. The LDH of the invention can further be used in applications where the separate functions of the LDH and the organic anions may be combined, such as in the paper making process or the detergent industry. Additionally, the LDH of the invention can be used in controlled release applications for medicines, pesticides, and/or fertilizers, and as sorbent of organic compounds such as pollutants, colourants, etc.

The invention further pertains to nanocomposite materials comprising a polymeric matrix and the modified LDH according to the invention. Using the modified LDHs of the invention a higher degree of exfoliation and/or delamination can be obtained in a wider variety of polymer matrices, and the amount of micrometer-sized modified LDHs will generally be less or even absent. This enables the use of a lower amount of the modified LDH in the nanocomposite materials. It may therefore be possible to provide nanocomposite materials with a relatively low density and good mechanical properties. Completely exfoliated and/or delaminated LDHs in the nanocomposite materials may render the material transparent to visible light, and thus make it suitable for use in optical applications.
The term "nanocomposite material" refers to a composite material wherein at least one component comprises an inorganic phase with at least one dimension in the 0.1 to 100 nanometer range.

Specifically suitable for use in the nanocomposite materials of the present invention are LDHs comprising a mixture of charge-balancing organic anions of which at least one is chemically altered so as to be more compatible or reactive with the polymer matrix. This results in an improvement of the interaction between the LDH and the polymer matrix, resulting in improved mechanical and/or viscoelastic properties. More compatible organic anions may comprise a substituted or unsubstituted aliphatic or aromatic hydrocarbon having 1 to 40 carbon atoms. Alternatively or additionally, at least one of the organic anions may comprise a reactive group selected from the group consisting of acrylate, methacrylate, hydroxyl, chloride, amine, epoxy, thiol, vinyl, di- and polysulfides, carbamate, ammonium, sulfonic, sulfinic, sulfonium, phosphonium, phosphinic, isocyanate, mercapto, hydroxyphenyl, hydride, acetoxy, and anhydride.

The polymer that can be suitably used in the nanocomposite material of the invention can be any polymer matrix known in the art. In this specification, the term "polymer" refers to an organic substance of at least two building blocks (i.e. monomers), thus including oligomers, copolymers, and polymeric resigns. Suitable polymers for use in the polymer matrix are both poly-adducts and polycondensates. The polymers may further be homopolymers or copolymers. Preferably, the polymeric matrix has a degree of polymerization of at least 20, more preferably of at least 50. In this connection, for a definition of the degree of polymerization, reference is made to P.J. Flory, Principles of Polymer Chemistry, New York, 1953.
Examples of suitable polymers are polyolefins, such as polyethylene or polypropylene, vinyl polymers, such as polystyrene, polymethyl methacrylate, polyvinyl chloride, polyvinylidene chloride or polyvinylidene fluoride, saturated polyesters, such as polyethylene terephthalate, polylactic acid, or poly(ε-caprolactone), unsaturated polyester resins, acrylate resins, methacrylate resins, polyimides, epoxy resins, fenol formaldehyde resins, urea formaldehyde resins, melamine formaldehyde resins, polyurethanes, polycarbonates, polyaryl ethers, polysulfones, polysulfides, polyamides, polyether imides, polyether esters, polyether ketones, polyether ester ketones, polysiloxanes, polyurethanes, polyepoxides, and blends of two or more polymers. Preferably used are polyolefins, vinyl polymers, polyesters, polycarbonates, polyamides, polyurethanes or polyepoxides.
The organoclay according to the invention is particularly suitable for use in thermoplastic polymers such as polyethylene, polypropylene, polystyrene, and acetal (co)polymers such as polyoxymethylene (POM), and in rubbers such as natural rubber (NR), styrene-butadiene rubber (SBR), polyisoprene (IR), polybutadiene (BR), polyisobutylene (IIR), halogenated polyisobutylene, butadiene nitrile rubber (NBR), hydrogenated butadiene nitrile (HNBR), styreneisoprene-styrene (SIS) and similar styrenic block copolymers, poly(epichlorohydrin) rubbers (CO, ECO, GPO), silicon rubbers (Q), chloroprene rubber (CR), ethylene propylene rubber (EPM), ethylene propylene diene rubber (EPDM), polysulfide rubber (T), fluorine rubbers (FKM), ethylene vinyl acetate rubber (EVA), polyacrylic rubbers (ACM), polynorbornene (PNR), polyurethanes (AU/EU), and polyester/ether thermoplastic elastomers.

Particularly preferred are polymers or copolymers obtainable by polymerization of at least one ethylenically unsaturated monomer. Examples of such polymers are polyolefins and modified polyolefins, which are known to the man skilled in the art. The polyolefin or modified polyolefin can be a homopolymer or a copolymer. Suitable examples of such (modified) polyolefins are polyethylene, polypropylene, polybutylene, polystyrene, polyvinyl chloride, polyvinylidene chloride, and ethylene-propylene rubber, propylene-butene copolymer, ethylene-vinyl chloride copolymer, ethylene-vinyl acetate copolymer, acrylonitrile-butadiene-styrene copolymer (ABS), acrylonitrile-acrylate-styrene copolymer (AAS), methyl methacrylate-butadiene-styrene copolymer (MBS), chlorinated polyethylene, chlorinated polypropylene, ethylene-acrylate copolymer, vinyl chloride-propylene copolymer, and mixtures thereof. Even more preferred polymers are polyethylene, polypropylene, polystyrene, and polyvinyl chloride.
Specific examples of polyethylene are high-density polyethylene, low-density polyethylene, straight chain low-density polyethylene, ultra-low-density polyethytlene, and ultra-high-molecular weight polyethylene. Examples of ethylene-based copolymers are ethylene-vinyl acetate copolymer (EVA), ethylene-ethyl acrylate copolymer (EEA), ethylene-methyl acrylate copolymer (EMA), and ethylene-acrylic acid copolymer (EAA).
The most preferred polymer is polypropylene. Any polypropylene known in the art will be suitable for use in the present invention. Examples of polypropylenes are given in "Polypropylene", Chapter 1: "Properties", by R.B. Lieberman in Kirk-Othmer Encyclopedia of Chemical Technology, online posting date December 4, 2000. A particular class of polypropylenes of the invention is formed by the so-called thermoplastic polyolefins (TPO), which include blends or reactor grades of polypropylene and EPR rubber.

The nanocomposite material of the invention may further comprise additives commonly used in the art. Examples of such additives are pigments, dyes, UV-stabilizers, heat-stabilizers, anti-oxidants, fillers (such as talc, chalk, lime, hydroxyapatite, silica, carbon black, glass fibres, natural and synthetic fibres, and other inorganic materials), flame retardants, nucleating agents, impact modifiers, plasticizers, rheology modifiers, cross-linking agents, coupling agents, and degassing agents.
These optional addenda and their corresponding amounts can be chosen according to need.

The amount of LDH in the nanocomposite material preferably is 0.01-75 wt%, more preferably 0.05-50 wt%, even more preferably 0.1-30 wt%, based on the total weight of the mixture.
LDH amounts of 10 wt% or less, preferably 1-10 wt%, more preferably 1-5 wt%, are especially advantageous for the preparation of polymer-based nanocomposites, i.e. polymer-containing compositions according to the invention that contain delaminated - up to exfoliated - organically modified LDH.
LDH amounts of 10-70 wt%, more preferably 10-50 wt%, are especially advantageous for the preparation of so-called masterbatches, i.e. highly concentrated additive premixes for, e.g., polymer compounding. Although the clay in such masterbatches in general is not completely delaminated and/or exfoliated, further delamination and/or exfoliation may be reached at a later stage, if so desired, when blending the masterbatch with a further polymer to obtain true polymer-based nanocomposites.

The nanocomposite material of the present invention can be prepared according to any method known to a person skilled in the art. A skilled person may intimately mix a polymer matrix and the organoclay according to the invention by using melt-blending techniques, for instance. This method is preferred, as it is simple, cost-effective, and readily applicable in existing plants. It is also envisaged to prepare the clay of the invention in the presence of the polymer matrix, or in the presence of the monomers and/or oligomers before, while or after the monomers and/or oligomers are polymerized to form the polymer matrix. Further details of the preparation and processing of polypropylene can be found in "Polypropylene", Chapter 2: "Manufacture", and Chapter 3: "Processing", by R.B. Lieberman in Kirk-Othmer Encyclopedia of Chemical Technology, online posting date December 4, 2000.

The nanocomposite material of the present invention can be used in any application in which these composite materials are conventionally used. The nanocomposite material can be suitably used in carpeting, automobile parts, container closures, lunch boxes, closures, medical devices, household articles, food containers, dishwashers, outdoor furniture, blow-moulded bottles, disposable non-woven fabrics, cables and wires, and packaging. Further details for polypropylene can be found in "Polypropylene", Chapter 5: "Uses", by R.B. Lieberman in Kirk-Othmer Encyclopedia of Chemical Technology, online posting date December 4, 2000, and in brochure 022 PPe 10/01 of Basell entitled "Polypropylene: Textile, Rigid Packaging, Consumer, Film, Automotive, Electrical/Electronics and Home Appliances".

The nanocomposite materials comprising rubber can be suitably applied in tyre manufacture such as in green tyres, truck tyres, off-the-road tyres and aircraft tyres, in winter tyres, in latex products including gloves, condoms, balloons, catheters, latex thread, foam, carpet backings, and rubberized coir and hair, in footwear, in civil engineering products such as bridge bearings, rubber-metal-laminated bearings, in belting and hoses, in non-tyre automotive applications including engine mounts, rubber bearings, seals, grommets, washers and boots, in wires and cables, and in pipe seals, medical closures, rollers, small solid tyres, mountings for domestic and commercial appliances, rubber balls and tubing, milking inflations and other agricultural-based applications.

If the rubber is a silicone rubber and the modified layered double hydroxide is in accordance with the present invention, these nanocomposite materials can suitably be applied in coating products including pressure-sensitive adhesives, plastic hardcoats, and paper release coatings, in fibre finishing applications including textile and hair care applications, sealants, adhesives, encapsulants, and solar cell units.

The present invention is further illustrated in the Examples below.

### Description of the Figures

**Figure 1** shows the TEM image of the SBR rubber nanocomposite material of Comparative Example 4.
**Figure 2** is a TEM image of the SBR rubber nanocomposite of Example 5.

### Examples

A commercially available fatty acid was used as received. The Kortacid^{®} PH05, a blend of palmitic and stearic acid, was supplied by Oleochemicals GmbH, a company of Akzo Nobel Chemicals.
In addition, a stabilized rosin was also used. The stabilized rosin was produced in-house by melting Chinese gum rosin and heating it to 235°C. During melting 3.5% Vultac^{®}-2 (ex Arkema Inc.) by weight on rosin was added. The molten rosin was stirred at 235°C for 15 hrs, after which the resin was cooled and ready for use.

### Example 1

68.2 grams of magnesium oxide (Zolitho 40, ex Martin Marietta Magnesia Specialties LLC) and 43.6 grams of aluminium trihydroxide (Alumill F505) were mixed in 840 grams of demineralized water and ground to an average particle size (d₅₀) of 2.5 µm. The slurry was fed to an oil-heated autoclave equipped with a high-speed stirrer and heated to 80°C. Then 132 grams of a 50/50 suspension by weight of Kortacid^{®} PH05 and stabilized rosin as prepared above were added to the autoclave over a period of 15 minutes. Before addition, the acid suspension was heated to 80°C. After the acid addition, the autoclave was closed and heated to 170°C and kept there for 1 hour. Then the autoclave was cooled to about 40°C and the resulting slurry was removed. The slurry was then centrifuged at 2,000 rpm for about 10 minutes. The liquid was decanted and the solids were dried under vacuum in an oven overnight at 80°C.
The resulting hydrotalcite-like clay comprising fatty acid and rosin-based ions was analyzed with X-ray diffraction to determine the inter-gallery spacing or d-spacing. The XRD pattern of the hydrotalcite-like clay as prepared above shows minor hydrotalcite-related non-(hk0) reflections, indicating intercalation of the anionic clay. The intercalate exhibits a characteristic d(00I) value of 28 Å-which is much larger than the 7.6 Å or 8.0 Å d-spacing of pure hydrotalcite clay.

### Comparative Example 2

300 grams of magnesium oxide (Zolitho^{®} 40, ex Martin Marietta Magnesia Specialties LLC) and 230 grams of aluminium trihydroxide (Alumill F505) were mixed in 648 grams of demineralized water and ground to an average particle size (d₅₀) of 2.5 µm. The slurry was fed to an oil-heated autoclave equipped with a high-speed stirrer and heated to 120°C. Then 670 grams of stearic acid (ex Acros) were added to the autoclave over a period of 30 minutes. Before addition, the fatty acid was heated to 120°C. After the acid addition, the autoclave was heated to 170°C and kept there for 1 hour. Then the autoclave was cooled to about 40°C and the resulting slurry was removed. The slurry was filtered using a glass filter and resulting solid was dried under vacuum in an oven overnight at 80°C.
The resulting hydrotalcite-like clay comprising the fatty acid was analyzed with X-ray diffraction to determine the inter-gallery spacing or d-spacing. The XRD pattern of the hydrotalcite-like clay as prepared above shows minor hydrotalcite-related non-(hk0) reflections, indicating intercalation of the anionic clay. The intercalate exhibits a characteristic D(00I) value of 29 Å.

### Example 3

A commercially available fatty acid was used as received. The Kortacid^{®} PH05, a blend of palmitic and stearic acid, was supplied by Oleochemicals GmbH, a company of Akzo Nobel Chemicals.

50 grams of magnesium oxide (Zolitho^{®} 40, ex Martin Marietta Magnesia Specialties LLC) and 39 grams of aluminium trihydroxide (Alumill F505) were mixed in 648 grams of demineralized water and ground to an average particle size (d₅₀) of 2.5 µm. The slurry was fed to an oil-heated autoclave equipped with a high-speed stirrer and heated to 120°C. Then 102 grams of Kortacid^{®} PH05 were added to the autoclave over a period of 30 minutes. Before addition, the fatty acid blend was heated to 120°C. After the acid addition, the autoclave was heated to 170°C and kept there for 1 hour. Then the autoclave was cooled to about 40°C and the resulting slurry was removed. The slurry was then centrifuged at 2,000 rpm for about 10 minutes. The liquid was decanted and the solids were dried under vacuum in an oven overnight at 80°C.
The resulting hydrotalcite-like clay comprising the fatty acids blend was analyzed with X-ray diffraction to determine the inter-gallery spacing or d-spacing. The XRD pattern of the hydrotalcite-like clay as prepared above shows minor hydrotalcite-related non-(hk0) reflections, indicating intercalation of the anionic clay. The intercalate exhibits a characteristic d(00I) value of 28 Å.

### Comparative Example 4 and Example 5

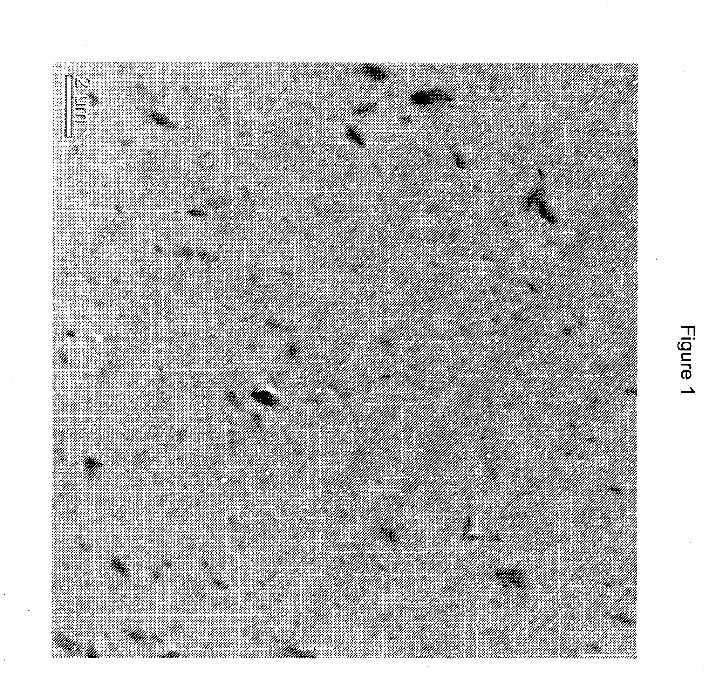

The modified layered double hydroxide of Example 2 was separately milled using a Hosokawa Alpine50 ZPS circoplex multi-processing mill. The resulting powder had a d50 value of 1.9 µm and a d90 of 5.7 µm, as determined in accordance with DIN 13320.
A masterbatch comprising 50 wt% of the powdered modified LDH of Comparative Example 2 and 50 wt% of Intol® 1502 (SBR rubber ex Polimeri) was prepared. The Intol® 1502 was fed to an open two-roll mill (Agila), after which the powdered modified LDH was added over a period of 30 minutes. The two-roll mill was operated at a temperature of between 50 and 70°C with a friction factor of 1.2.
The resulting masterbatch was diluted with the same rubber precursor on an open two-roll mill operated under the same conditions as described above, to a final concentration of 10 phr of modified LDH in rubber. In a second step, samples of the diluted compounds were exfoliated in an internal mixer (Rheocord® 90 fitted with the 60 CC mixing chamber Rheomix® 600 containing roller rotors) at 60°C and 50 rpm for 10 minutes.
In a two-roll mill, about 50 grams of the obtained sample were then mixed with 0.52 phr of dicumyl peroxide (Perkadox® BC-ff ex Akzo Nobel). The two-roll mill was operated at a temperature between 50 and 70°C with a friction factor of 1.2. The thus obtained mixture was finally compression moulded into sheets of 2 mm thickness at 170°C and 400 kN for 15 minutes, to obtain a nanocomposite material of SBR rubber (the nanocomposite material of Comparative Example 4).
The nanocomposite material was analyzed using a transmission electron microscope. The resulting TEM image is shown in Figure 1.

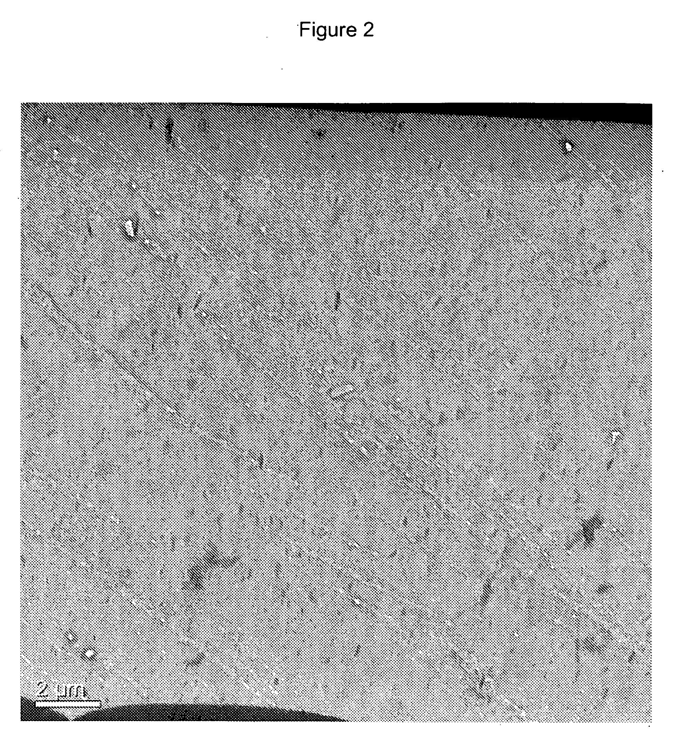

The modified LDH of Example 3 was milled using the same procedure as described above. The resulting powder had a d50 value of 4.0 µm and a d90 of 10.5 µm.
A second masterbatch comprising 50 wt% of the powdered modified LDH of Example 3 and 50 wt% of Intol® 1502 was prepared in the same way as described above.
The TEM image of this nanocomposite material (the nanocomposite material of Example 5) is shown in Figure 2.

The TEM images of Figures 1 and 2 show the distribution of the clay in the SBR rubber matrix. It can be clearly seen that Figure 1 reveals large clay particles in the rubber matrix, whereas these large particles are absent from Figure 2. Moreover, the distribution of the clay platelets in Figure 2 is better than the distribution observed in Figure 1. In conclusion, the nanocomposite comprising the LDH of the invention reveals that the clay is more easily delaminated/- exfoliated, and shows an improved clay distribution in the SBT rubber matrix over the LDH of Example 2.

## Claims

1. A layered double hydroxide having a distance between the individual layers of the layered double hydroxide of above 1.5 nm and comprising 2 or more charge-balancing organic anions having 8 or more carbon atoms, wherein at least 2 of the organic anions have a different number of carbon atoms, and wherein less than 10% of the total of charge-balancing anions are charge-balancing organic anions having 2 or more anionic groups.

2. A layered double hydroxide according to claim 1 comprising 3 or more charge-balancing organic anions having 8 or more carbon atoms, with the layered double hydroxide preferably comprising 4 or more charge-balancing organic anions.

3. A layered double hydroxide according to either of claims 1 and 2 wherein the organic anions having 8 or more carbon atoms constitute at least 50% of the total of charge-balancing ions.

4. A nanocomposite material comprising the layered double hydroxide according to any one of the preceding claims in a polymer matrix.

5. A nanocomposite material according to claim 4 wherein the polymeric matrix comprises a (co)polymer obtainable by polymerization of at least one ethylenically unsaturated monomer.

6. A nanocomposite material according to claim 4 wherein the polymer is a rubber.

7. A nanocomposite material according to any one of claims 4-6 wherein at least one of the organic anions having 8 or more carbon atoms comprises a reactive group selected from the group consisting of acrylate, methacrylate, hydroxyl, chloride, amine, epoxy, thiol, vinyl, di- and polysulfides, carbamate, ammonium, sulfonium, phosphonium, phosphinic, isocyanate, mercapto, hydroxyphenyl, hydride, acetoxy, and anhydride.

8. A nanocomposite material according to any one of claims 4-7 comprising 1-10 wt% of the layered double hydroxide, based on the total weight of the nanocomposite material.

9. A masterbatch comprising 10-70 wt% of the layered double hydroxide according to any one of claims 1 to 3, based on the total weight of the composite material, and 30-90 wt% of a polymer.

10. Use of a layered double hydroxide according to any one of claims 1-3 in a coating composition, ink formulation, adhesive tackifier, resin-based composition, rubber composition, cleaning formulation, drilling fluid, cement, plaster formulation, non-woven fabric, foam, membrane, orthoplastic cast, ceramic material, polymerization reaction, paper, detergent, controlled release application for medicines, pesticides, and/or fertilizers, or sorbent of organic compounds.

11. Use of a nanocomposite material according to any one of claims 4-9 in carpeting, automobile parts, container closures, lunch boxes, closures, medical devices, household articles, food containers, dishwashers, outdoor furniture, blow-moulded bottles, disposable non-woven fabrics, cables and wires, or packaging.

## Patentansprüche

1. Ein geschichtetes Doppelhydroxid mit einem Abstand zwischen den einzelnen Schichten des geschichteten Doppelhydroxids von über 1,5 nm und umfassend 2 oder mehr ladungsausgleichende organische Anionen mit 8 oder mehr Kohlenstoffatomen, wobei mindestens 2 der organischen Anionen eine unterschiedliche Anzahl an Kohlenstoffatomen aufweisen und wobei weniger als 10% der gesamten ladungsausgleichenden Anionen ladungsausgleichende organische Anionen mit 2 oder mehr anionischen Resten sind.

2. Ein geschichtetes Doppelhydroxid gemäß Anspruch 1, umfassend 3 oder mehr ladungsausgleichende organische Anionen mit 8 oder mehr Kohlenstoffatomen, wobei das geschichtete Doppelhydroxid vorzugsweise 4 oder mehr ladungsausgleichende organische Anionen umfasst.

3. Ein geschichtetes Doppelhydroxid gemäß einem der Ansprüche 1 und 2, wobei die organischen Anionen mit 8 oder mehr Kohlenstoffatomen mindestens 50% der gesamten ladungsausgleichenden Ionen ausmachen.

4. Ein Nanokompositmaterial, umfassend das geschichtete Doppelhydroxid gemäß einem der vorstehenden Ansprüche in einer Polymermatrix.

5. Ein Nanokompositmaterial gemäß Anspruch 4, wobei die Polymermatrix ein (Co)polymer, erhältlich durch Polymerisation mindestens eines ethylenisch ungesättigten Monomers, umfasst.

6. Ein Nanokompositmaterial gemäß Anspruch 4, wobei das Polymer ein Kautschuk ist.

7. Ein Nanokompositmaterial gemäß einem der Ansprüche 4-6, wobei mindestens eines der organischen Anionen mit 8 oder mehr Kohlenstoffatomen einen reaktiven Rest umfasst, ausgewählt aus der Gruppe bestehend aus Acrylat, Methacrylat, Hydroxyl, Chlorid, Amin, Epoxy, Thiol, Vinyl, Di- und Polysulfid, Carbamat, Ammonium, Sulfonium, Phosphonium, Phosphin, Isocyanat, Mercapto, Hydroxyphenyl, Hydrid, Acetoxy und Anhydrid.

8. Ein Nanokompositmaterial gemäß einem der Ansprüche 4-7, umfassend 1-10 Gew.-% des geschichteten Doppelhydroxids, bezogen auf das Gesamtgewicht des Nanokompositmaterials.

9. Ein Masterbatch, umfassend 10-70 Gew.-% des geschichteten Doppelhydroxids gemäß einem der Ansprüche 1 bis 3, bezogen auf das Gesamtgewicht des Kompositmaterials, und 30-90 Gew.-% eines Polymers.

10. Verwendung eines geschichteten Doppelhydroxids gemäß einem der Ansprüche 1-3 in einer/einem Beschichtungszusammensetzung, Tintenformulierung, Klebrigmacher für Klebstoff, Zusammensetzung auf Harzbasis, Kautschukzusammensetzung, Reinigungsformulierung, Bohrflüssigkeit, Zement, Gipsformulierung, Vlies, Schaum, Membran, orthopädischem Abguss, Keramikmaterial, Polymerisationsreaktion, Papier, Detergenz, Anwendung zur kontrollierten Medikamentenfreigabe, Pestiziden und/oder Düngemitteln oder einem Sorbtionsmittel für organische Verbindungen.

11. Verwendung eines Nanocompositmaterials gemäß einem der Ansprüche 4-9 in Auslegewaren, Automobilteilen, Behälterverschlüssen, Essensboxen, Verschlüssen, Medizingeräten, Haushaltsartikeln, Nahrungsmittelbehältern, Geschirrspülern, Freiluftmöbeln, blasgeformten Flaschen, Einweg-Stoffen, Kabeln und Drähten oder Verpackungsmaterial.

## Revendications

1. Hydroxyde à double couche ayant une distance entre les couches individuelles de l'hydroxyde à double couche supérieure à 1,5 nm et comprenant 2 ou plus anions organiques d'équilibre de charge ayant 8 ou plus atomes de carbone dans lequel, au moins 2 des anions organiques ont un nombre différent d'atomes de carbone, et au moins 10 % du total des anions d'équilibre de charge sont des anions organiques d'équilibre de charge ayant 2 groupes anioniques ou plus.

2. Hydroxyde à double couche selon la revendication 1, comprenant 3 ou plus anions organiques d'équilibre de charge ou plus ayant 8 atomes de carbone ou plus, l'hydroxyde à double couche comprenant de préférence 4 anions organiques d'équilibre de charge ou plus.

3. Hydroxyde à double couche selon l'une quelconque des revendications 1 et 2, dans lequel les anions organiques ayant 8 atomes de carbone ou plus représentent au moins 50 % du total des ions d'équilibre de charge.

4. Matériau nanocomposite comprenant l'hydroxyde à double couche selon l'une quelconque des revendications précédentes dans une matrice polymère.

5. Matériau nanocomposite selon la revendication 4, dans lequel la matrice polymère comprend un (co)polymère pouvant être obtenu par polymérisation d'au moins un monomère à insaturation éthylénique.

6. Matériau nanocomposite selon la revendication 4, dans lequel le polymère est un caoutchouc.

7. Matériau nanocomposite selon l'une quelconque des revendications 4 à 6, dans lequel au moins un des anions organiques ayant 8 atomes de carbone ou plus comprend un groupe réactif choisi dans le groupe constitué par les groupes acrylate, méthacrylate, hydroxyle, chlorure, amine, époxy, thiol, vinyle, di- et polysulfides, carbamate, ammonium, sulfonium, phosphonium, phosphinique, isocyanate, mercapto, hydroxyphényle, hydrure, acétoxy et anhydride.

8. Matériau nanocomposite selon l'une quelconque des revendications 4 à 7, comprenant de 1 à 10 % en poids de l'hydroxyde à double couche, par rapport au poids total du matériau nanocomposite.

9. Mélange maître comprenant de 10 à 70 % en poids de l'hydroxyde à double couche selon l'une quelconque des revendications 1 à 3, par rapport au poids total du matériau composite, et de 30 à 90 % en poids d'un polymère.

10. Utilisation d'un hydroxyde à double couche selon l'une quelconque des revendications 1 à 3 dans une composition de revêtement, une formulation d'encre, un agent collant, une composition à base de résine, une composition de caoutchouc, une formulation de nettoyage, un fluide de forage, un ciment, une formulation de plâtre, un tissu non tissé, une mousse, une membrane, un moule orthoplastique, un matériau céramique, une réaction de polymérisation, un papier, un détergent, une application à libération contrôlée pour les médicaments, des pesticides et/ou des fertilisants, ou un sorbant de composés organiques.

11. Utilisation d'un matériau nanocomposite selon l'une quelconque des revendications 4 à 9 dans les moquettes, les parties automobiles, les fermetures de conteneurs, les boîtes pour repas, les fermetures, les appareils médicaux, les articles ménagers, les récipients pour aliments, les lave-vaisselles, le mobilier d'extérieur, les bouteilles moulées par soufflage, les tissus non tissés jetables, les câbles et les fils, ou les emballages.
